(19) Europäisches Patentamt / European Patent Office / Office européen des brevets

(11) **EP 3 220 635 B1**

(12) **EUROPEAN PATENT SPECIFICATION**

(45) Date of publication and mention
of the grant of the patent:
**09.02.2022  Bulletin 2022/06**

(21) Application number: **17161350.8**

(22) Date of filing: **16.03.2017**

(51) International Patent Classification (IPC):
*H04N 7/15* $^{(2006.01)}$    *H04L 29/06* $^{(2006.01)}$
*H04L 12/18* $^{(2006.01)}$    *H04N 7/14* $^{(2006.01)}$

(52) Cooperative Patent Classification (CPC):
**H04N 7/152; H04L 12/1827; H04L 65/1059;**
**H04L 65/1083; H04N 7/147; H04N 7/15**

(54) **SEAMLESS TRANSITION OF A VIDEO SESSION BETWEEN A MESH TOPOLOGY AND A CENTRALIZED BRIDGE TOPOLOGY**

NAHTLOSER ÜBERGANG BEI EINER VIDEOSITZUNG ZWISCHEN EINER MESH-TOPOLOGIE UND EINER ZENTRALISIERTEN BRIDGE-TOPOLOGIE

TRANSITION SANS COUPURE D'UNE SESSION VIDÉO ENTRE UNE TOPOLOGIE MAILLÉE ET UNE TOPOLOGIE DE PONT CENTRALISÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.03.2016  IN 201631009178**
**27.07.2016  US 201615221371**

(43) Date of publication of application:
**20.09.2017  Bulletin 2017/38**

(73) Proprietor: **Polycom, Inc.**
**San Jose, CA 95002 (US)**

(72) Inventors:
• **Pai, Deep Subhash**
**411004 Pune (IN)**
• **Ignjatic, Dragan**
**111070 Belgrade (RS)**

(74) Representative: **Käck, Stefan et al**
**Kahler Käck Mollekopf**
**Partnerschaft von Patentanwälten mbB**
**Vorderer Anger 239**
**86899 Landsberg/Lech (DE)**

(56) References cited:
EP-A1- 2 863 632    WO-A1-2016/019775
US-A1- 2011 019 593    US-A1- 2015 271 447
US-A1- 2015 288 926

• **MMUSIC WG SCHULZRINNE/ROSENBERG COLUMBIA U /BELL LABORATORIES: "SIP Call Control Services; draft-ietf-mmusic-sip-cc-01.txt", SIP CALL CONTROL SERVICES; DRAFT-IETF-MMUSIC-SIP-CC-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. mmusic, no. 1, 17 June 1999 (1999-06-17), XP015023272,**
• **SCHULZRIMME H ET AL: "SIGNALING FOR INTERNET TELEPHONY", PROCEEDINGS OF THE INTERNATIONAL CONFERENCE ON NETWORKPROTOCOLS, XX, XX, 1 October 1998 (1998-10-01), pages 1-27, XP002940989,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to the field of videoconferencing, and in particular to a technique for transitioning a video session between a mesh topology and a centralized bridge topology or a centralized selective forwarding unit.

### BACKGROUND ART

A full mesh peer-to-peer topology in a video conference is achieved by setting up independent audio/video real-time RTP streams between each participant of the conference such that each participant transmits one audio/video stream to each other participant and receives the same from each other participant. The main advantage of a full mesh conference by way of comparison to the more traditional centralized bridge conference method is the lower latency of media and the elimination of bottlenecks in the form of centralized media servers. Mesh conferencing also is more cost efficient in terms of cloud resources. On the other hand, full mesh peer-to-peer topology cannot be scaled beyond a certain number of participants per session due to bandwidth limitations. In such case a bridge topology where media is sent to a centralized media server is more efficient and scalable.

In case of multi-party conference call in meshed mode all the participants send their media to each other directly. If this meshed call is escalated to bridged mode (due to legacy endpoints joining the conference or exceeding the maximum number of participants in meshed mode) then all the participants in existing conference call are forced to join the conference call on an Audio/Video Bridge such as a multipoint control unit (MCU). This transition from a meshed call to a bridged call creates a disruption in the already running conference. This escalation or transition sometimes takes more than an expected length of time, producing a blackout period in the conference call. Thus, users experience discontinuity in the video and audio streams of their conference call when escalation happens.

Since the network and device capability are changing rapidly, the criteria to decide a mesh call to a bridge call can be very dynamic. Currently the criteria are mainly the number of participants. With the increase in the network bandwidth, and the use of mobile endpoints and standards like WEBRTC ("Web Real-Time Communication") there are other factors that can affect the user experience in a meshed-based conference call. This can create very bad experiences for users if their device is not capable of supporting the number of streams needed for the conference or the network conditions are not good.

U.S. Patent Application Publication No. US 2015/0271447 A1 teaches a method of conferencing participant video data and audio data. The method includes switching from a mesh-based conference to an MCU-based conference upon the occurrence of a trigger event. The mesh-based conference includes transmitting separate video and audio data streams between endpoints, and the MCU-based conference includes transmitting single video/audio data from endpoints to an MCU and combined video/audio data streams from the MCU to the endpoints

European Patent Application Publication No. EP 2 863 632 A1 describes a system and method that provide a rule-based technique for adapting a videoconferencing system to current conditions of a conference session, automatically converting the session from one conferencing technique to another, based on those current conditions. Rules may involve criteria including number of participants, ability to use a common codec, among others. An escalation module can be used to manage the transition between one type of conference session and another. If a condition occurs that causes transitioning the conference from one type to another, when that condition no longer applies, the conference may automatically transition back to the original conferencing type.

### SUMMARY OF INVENTION

The invention is defined in claims 1, 7, and 11, respectively. Particular embodiments are set out in the dependent claims.

To fully utilize the advantages of both topologies, we use a hybrid approach where the video session starts with a mesh topology and then escalates or transitions to a bridge topology based on a number of criteria such as available bandwidth, number of participants, need for recording etc. Similarly the bridge topology can deescalate or transition to a mesh topology when the number of participants decreases or other such criteria.

In the discussion below, we propose a technique for making such transitions between mesh and bridge topology seamless to the end user of the video session, i.e. without a significant gap between the audio and video experience of the video session when the transition occurs. In addition, a function is described for triggering the transitions.

### BRIEF DESCRIPTION OF DRAWINGS

The accompanying drawings, which are incorporated in and constitute a part of this specification, illustrate an implementation of apparatus and methods consistent with the present invention and, together with the detailed description, serve to explain advantages and principles consistent with the invention. In the drawings,

Figure 1 is a flowchart illustrating a technique for seamlessly transitioning a videoconferencing session from a mesh topology to a bridge topology according to one embodiment.

Figure 2 is a flowchart illustrating a technique for seamlessly transitioning a videoconferencing session from a bridge topology to a mesh topology according to one embodiment.

Figure 3 is a block diagram of a system illustrating a mesh topology videoconferencing session according to one embodiment.

Figure 4 is a block diagram of a system illustrating a bridge topology videoconferencing session according to one embodiment.

Figure 5 is a flowchart illustrating a technique for triggering escalation of a mesh-based conference to a bridged conference according to one embodiment.

Figure 6 is a block diagram illustrating a mesh-based conference according to one embodiment.

Figure 7 is a block diagram illustrating another endpoint attempting to join the conference of FIG. 6.

Figure 8 is a block diagram illustrating use of an escalation manager according to one embodiment for managing the escalation of the mesh-based conference of FIG. 6 to a bridged conference.

Figure 9 is a block diagram of the conference of FIG. 8, transitioned to a fully bridged conference according to one embodiment.

Figure 10 is a block diagram of a mesh-based conference in transition to a bridged conference according to one embodiment.

Figure 11 is a block diagram of the conference of FIG. 10 after transitioning to a bridged conference.

## DESCRIPTION OF EMBODIMENTS

In the following description, for purposes of explanation, numerous specific details are set forth in order to provide a thorough understanding of the invention. It will be apparent, however, to one skilled in the art that the invention may be practiced without these specific details. In other instances, structure and devices are shown in block diagram form in order to avoid obscuring the invention. References to numbers without subscripts or suffixes are understood to reference all instance of subscripts and suffixes corresponding to the referenced number. Moreover, the language used in this disclosure has been principally selected for readability and instructional purposes, and may not have been selected to delineate or circumscribe the inventive subject matter, resort to the claims being necessary to determine such inventive subject matter. Reference in the specification to "one embodiment" or to "an embodiment" means that a particular feature, structure, or characteristic described in connection with the embodiments is included in at least one embodiment of the invention, and multiple references to "one embodiment" or "an embodiment" should not be understood as necessarily all referring to the same embodiment.

The terms "a," "an," and "the" are not intended to refer to a singular entity unless explicitly so defined, but include the general class of which a specific example may be used for illustration. The use of the terms "a" or "an" may therefore mean any number that is at least one, including "one," "one or more," "at least one," and "one or more than one."

The term "or" means any of the alternatives and any combination of the alternatives, including all of the alternatives, unless the alternatives are explicitly indicated as mutually exclusive.

The phrase "at least one of' when combined with a list of items, means a single item from the list or any combination of items in the list. The phrase does not require all of the listed items unless explicitly so defined.

As used herein, the term "a computer system" can refer to a single computer or a plurality of computers working together to perform the function described as being performed on or by a computer system.

In the following description, the conference call or conference session may be either audio-only, video-only, or a mixture of audio and video. In addition, although not illustrated in the Figures for clarity, data-only streams may be provided in the conference session. The terms "call" and "session" are used synonymously herein. In addition, the terms "participant" and "endpoints" are used interchangeably, even though multiple people may participate at any given endpoint.

As used herein, the term "processing element" can refer to a single hardware processing element or a plurality of hardware processing elements that together may be programmed to perform the indicated actions. The hardware processing elements may be implemented as virtual hardware processing elements of a virtual programmable device hosted on a physical hardware device. Instructions that when executed program the processing element to perform an action may program any or all of the processing elements to perform the indicated action. Where the processing element is one or more multi-core processors, instructions that when executed program the processing element to perform an action may program any or all of the multiple cores to perform the indicated action.

As used herein, the term "medium" can refer to a single physical medium or a plurality of media that together store the information described as being stored on the medium.

As used herein, the term "memory" can refer to a single memory device or a plurality of memory devices that together store the information described as being stored on the medium. The memory may be any type of storage device, including random access memory, read-only memory, optical and electromechanical disk drives, etc.

Seamless Transitioning from a Mesh Topology to a Bridge Topology:

When an endpoint has to transition from mesh topology to bridge topology, the endpoint sets up an audio/video stream with the bridge, creating a bridge connection. The endpoint terminates the mesh connections for the mesh streams only after both endpoints of a particular mesh stream have joined the bridge. This provides continuity and a smooth transition for the audio experience, however, is insufficient for a seamless video transition. The bridge stream video is hidden at the endpoint until the current active speaker on the mesh call has transitioned to the bridge at which point the bridge video is shown and all of the remaining mesh videos (if any) are hidden. This provides continuity for the video experience.

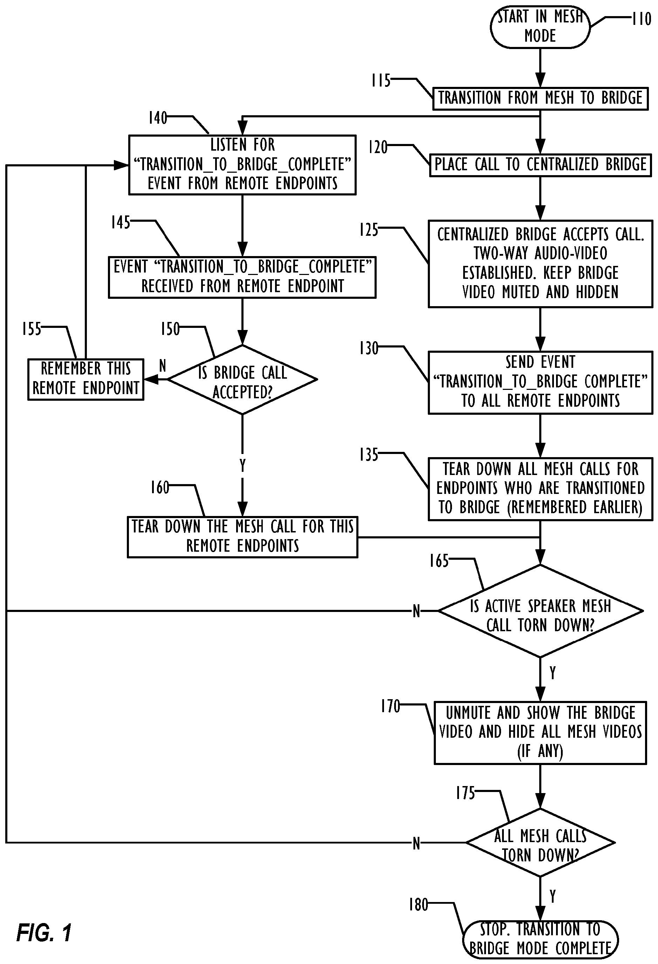

FIG. 1 is a flowchart illustrating a technique for performing a transition from mesh mode to bridge mode according to one embodiment.

At the beginning in block 110, the endpoint is in an audio/video session in mesh mode. In block 115, the endpoint receives an event to trigger the transition from mesh mode to bridge mode. This event could be due to any criteria such as a change in the number of participants, a change in bandwidth, etc.

In block 140, the endpoint listens for a "transition_to_bridge_complete" event from all other endpoints. In block 145, the endpoint detects this event received from another endpoint. The endpoint determines in block 150 whether the bridge call has been accepted (block 125 below). If not, the endpoint remembers that the other endpoint has completed the transition to a bridged session and returns to listening for additional "transition_to_bridge_complete" events in block 140.

At same time as the endpoint starts listening for the "transition_to_bridge_complete" event, endpoint also initiates an audio/video stream to the centralized bridge in block 120. The centralized bridge accepts the call and two-way audio/video streams are established with the centralized bridge in block 125. In one embodiment, the endpoint keeps the remote video muted in the bridge session to save bandwidth. Audio from both the mesh streams and the bridge stream is audible at this time.

In block 130, the endpoint broadcasts a "transition_to_bridge_complete" event to all other endpoints. The endpoint then tears down in block 135 the mesh audio/video stream of only those remote endpoints from which the endpoint has already received the "transition_to_bridge_complete" event.

The endpoint continues to listen for "transition_to_bridge_complete" events from remote endpoints, tearing down in block 160 the mesh audio/video streams as the event is received.

When the endpoint terminates the mesh stream for the remote endpoint who is the current active speaker as determined in block 165, the endpoint hides all the mesh video streams (if any) and shows only the bridge video stream in block 170.

When "transition_to_bridge_complete" events have been received from all the remote endpoints, as determined in block 175, there are no more mesh connections and the transition to bridge completes in block 180. The "transition_to_bridge_complete" designation is illustrative and by way of example only, and any designation for the event may be used.

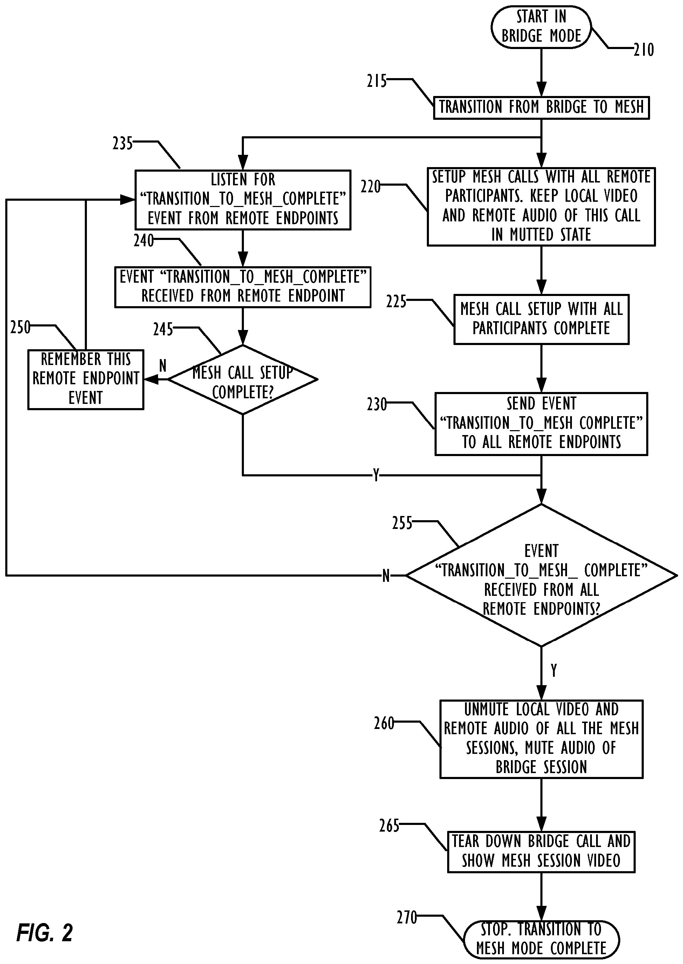

FIG. 2 is a flowchart illustrating a similar technique for seamless transition from bridge mode to mesh mode according to one embodiment.

When a endpoint has to transition from bridge topology to mesh topology, the endpoint sets up mesh connections for audio/video streams with all the remote endpoints. The mesh streams are setup with local video muted and remote audio in muted state to save bandwidth and avoid double audio. Once the complete mesh topology is setup between all the endpoints, the endpoint unmutes the local video and remote audio on the mesh streams and terminates the bridge connection for the bridge stream.

At each endpoint, as illustrated in FIG. 2, at block 210 the endpoint is currently in a video session in bridge mode. The endpoint receives an event in block 215 to trigger the transition from bridge mode to mesh mode. This event could be due to any criteria such as a change in the number of participants, a change in bandwidth, etc.

In block 235, the endpoint listens for "transition_to_mesh_complete" events from other endpoints. On receiving this event in block 240, in block 245 the endpoint determines whether the transition is complete for all endpoints and if not, in block 250 the endpoint remembers which endpoints have already completed transition to mesh.

As the endpoint listens for "transition_to_mesh_complete" event, the endpoint starts setting up mesh audio/video streams with all the remote endpoints in block 220. These mesh streams are initiated with their local video and remote audio in muted state. The local video is muted to keep the bandwidth down and remote audio is muted to prevent double audio from the same participant.

When the setup of mesh calls with all the remote endpoints is complete in block 225, the endpoint sends out a "transition_to_mesh_complete" event to all remote endpoints in block 230.

When the "transition_to_mesh_complete" event is received from all the remote endpoints as determined in block 255, this endpoint unmutes the local video and remote audio in the mesh calls in block 260, tears down the bridge stream and shows the mesh call videos streams in block 265. The transition to mesh mode is then complete in block 270. The "transition_to_mesh_complete" designation for the event is illustrative and by way of example only, and any designation may be used.

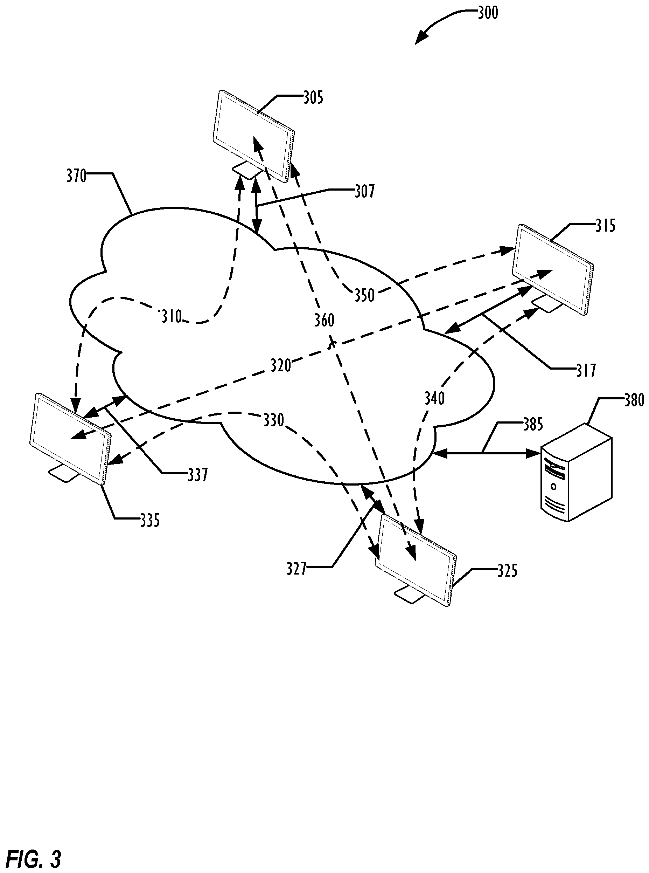

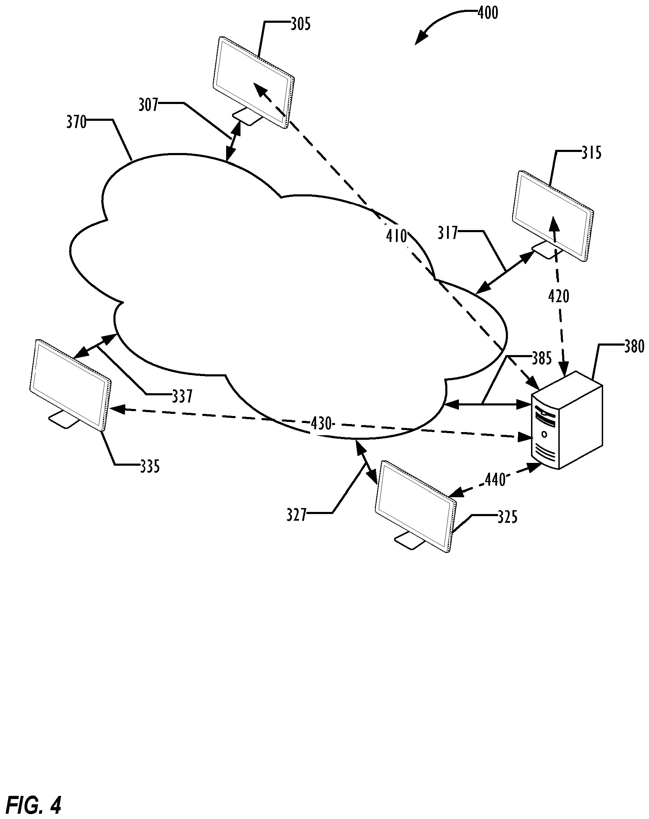

FIG. 3 is a block diagram illustrating a system 300 with videoconferencing sessions in a mesh topology according to one embodiment. FIG. 4 is a block diagram illustrating a system 400 with videoconferencing sessions in a bridged topology according to one embodiment. Endpoints 305, 315, 325, and 335 are illustrated in FIG. 3 with mesh connections 310, 320, 330, 340, 350, and 360 through network 370, using links 307, 317, 327, and 337 between the network 370 and endpoints 305, 315, 325, and 335. Although illustrated as a single network 370, any number of interconnected networks can interconnect the endpoints 305, 315, 325, and 335. Although in this example centralized bridge 380 is present and connected to network 370 via link 385, the mesh connections do not pass through the bridge 380. In FIG. 4, the session has transitioned to a bridge topology in which connections 410, 420, 430, and 440 are made via bridge 380, instead of directly between endpoints 305, 315, 325, and 335. The number of endpoints is illustrative and by way of example only, and any number of endpoints may be used, subject to resource availability.

Although described above as audio-video conferencing sessions, the disclosed techniques may be used for audio-only conferencing sessions, and may include additional content data streams (not shown in FIGs. 3-4 for clarity). The endpoints 305, 315, 325, and 335 and centralized bridge 380 may be programmable devices that can interact as audio-video or audio-only conferencing endpoints or bridges, generally including one or more programmable processors and a memory coupled to the processor that stores instructions that when executed cause the programmable processors to perform the techniques described above. The instructions may be provided on one or more machine readable media that store the instructions for loading into the memory. Other details of the endpoints and bridges outside the scope of this disclosure, but are well known to those of skill in the art.

The techniques described above can be implemented using any type of triggering event or triggering point. In the following, various metrics are described for identifying a triggering point for switching between a mesh and a centralized conference according to various embodiments. A mechanism is also described to collect the metrics and calculate a weighted index of the criteria to determine the triggering point.

By definition, in a mesh conference call, each participant establishes a separate media connection with each other participant. This consumes lot of CPU cycles/processing power on device. It also consumes lot of network bandwidth.

In one embodiment, the following criteria may be considered while deciding whether to escalate a mesh call to a bridge call.

1. The number (N) of participants in the session. As more participants join the conference, the number of media streams maintained by each endpoint increases. This can create a bad user experience.

2. A device bandwidth limitation (D1) for the meshed endpoint. In some scenarios, an endpoint may have good capacity but network bandwidth may be limiting. In such scenarios, handling multiple media connections in that network can be a problem.

3. A device computational limitation (D2) for the meshed endpoint. Mobile devices may have a wide range of capacity. For example, a low end mobile device may not be capable of handling multiple media streams.

4. A device power consumption (D3) for the meshed endpoint. For endpoints that are mobile devices, the power which can consumed for computation may also be limited.

5. Mobility (M) of the device for the meshed endpoint. Where endpoints are mobile devices, network routing and NAT traversals also can change during the call. These can trigger significant Session Description Protocol (SDP) renegotiation between participants, which can create bad experiences for some users.

5. Bridge user joins (B). In this scenario, a bridge user wants to the join a conference call that is currently running in a meshed based conference call.

In one embodiment, the triggering point is a function of all the above criteria:

$$Triggering\ point = F\ (N, D1, D2, D3, M, B)$$

Embodiments of the function can be a simple weighted index or any other mathematical model which be configured in the system. To implement such a system, in some embodiments a conference monitor collects all the metrics from the endpoint devices, using agents or in an agentless way. The conference monitor can run real-time analytics on the metrics data received from all the endpoint devices and calculate the triggering point value $F(N, D1, D2, D3, M, B)$. If the calculated triggering point value exceeds a predetermined configurable threshold value, the conference monitor may trigger escalation to a bridge call. Similarly, if the triggering point value is below a predetermined configurable threshold value, the conference monitor may trigger a transition from a bridge call to a mesh call.

In one embodiment, the function used to determine the triggering point and the thresholds is customizable in the system. Different functions and thresholds may be assigned to different conferences as desired. For example, some functions may weight the various parameters, giving different weights to different parameters as desired. Other functions may omit one or more of the above parameters, and may include one or more other parameters not described above. Based on the criteria used and the weighting of the parameters, one or more optimal thresholds for a triggering point may be identified for each conference session. In some embodiments, a single threshold may be used for transitioning between mesh and bridged sessions. In other embodiments, a first threshold may be used for transitioning from a mesh a second threshold used for transitioning from a bridged session to a mesh session.

By employing the seamless transitioning techniques described above with the triggering points, embodiments of the disclosed system provide a better user experience performing the transitions without breaking the existing conversation.

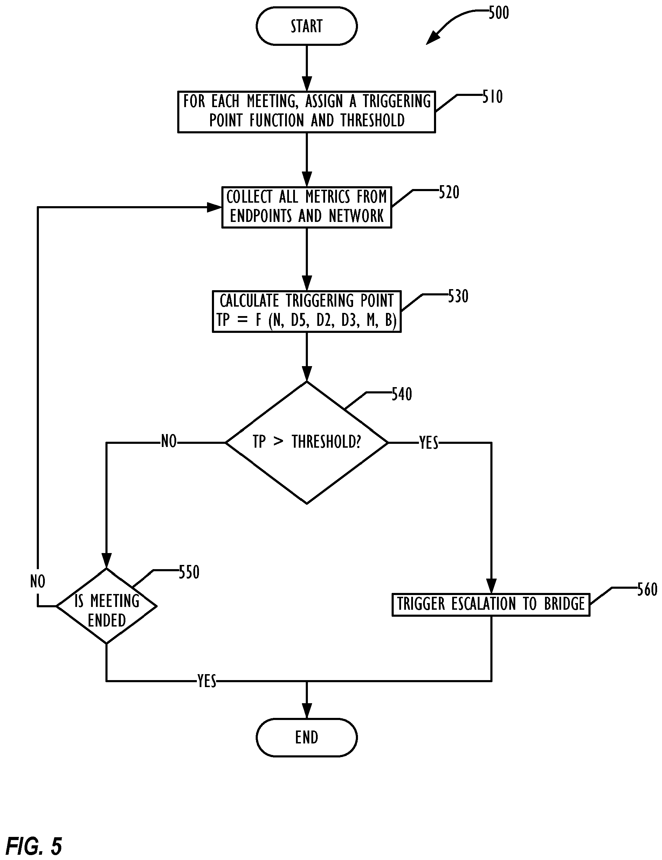

FIG. 5 is a flowchart 500 illustrating the technique outlined above according to one embodiment. In block 510, each conference is assigned a triggering point function and a trigger point threshold. In block 520, metrics relevant to the triggering point function are obtained from all endpoints in the conference. Metrics regarding network capacity and quality may also be obtained. The metrics may be collected with or without the use of agents, and some embodiments may use agents for collecting some metrics and not use agents for collecting other metrics. In block 530, the triggering point function is evaluated, in one embodiment applying metric data for the number of participants, device bandwidth limitations, device computational limitations, mobility of the devices, and bridge users. In block 540, the triggering point function value is evaluated against the threshold value. If the threshold is exceeded (or, in some embodiments, met), the conference is triggered to escalate to a bridged conference in block 560. If the triggering point value does not exceed (or meet) the threshold value, then in block 550 a check is made to determine whether the conference has ended. If not, then the technique repeats, beginning with the collection of metrics in block 520. If the conference has ended then the technique finishes. Although described in FIG. 5 as an escalation from a mesh session to a bridge session, the same technique may be used to trigger a transition from a bridge session to a mesh session.

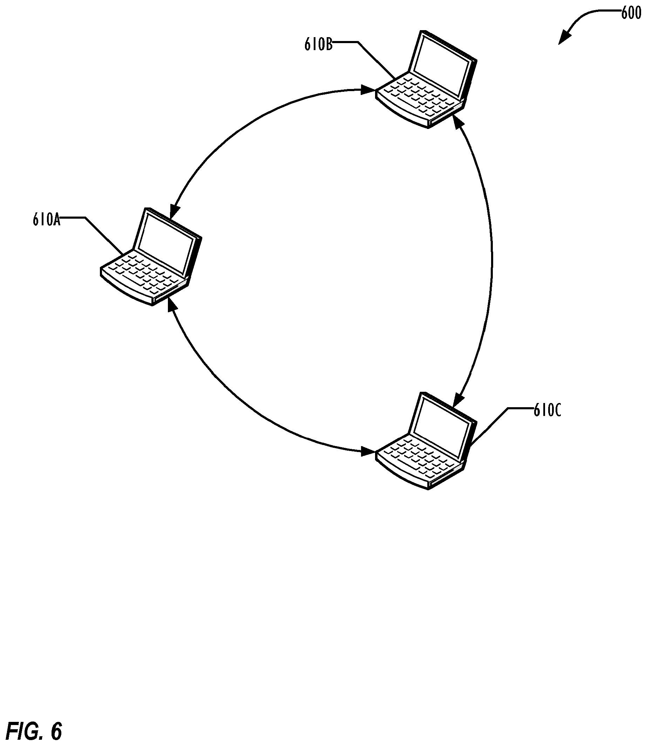

FIGs. 6-11 illustrate additional embodiments for transitioning between a mesh session and a bridge session, using the triggering function disclosed above. In the following, the triggering function for clarity is devolved to a simple function of the number of participants, and the threshold is a number of participants N. However, the technique disclosed below is not limited to such a "number of participants" function.

Consider a meshed-based conference call with a threshold of N participants where currently there are N-1 active participants. When a new participant joins the conference call, the call needs to be escalated to a bridge call. This transition may be handled by an escalation manager, separate from the endpoints, as illustrated in FIGs. 6-9.

When a new participant tries to join the meshed conference call as a participant, the escalation manager redirects the new participant to a bridge directly. The escalation manager itself then joins the meshed conference as the Nth participant on the mesh side of the escalation manager with the MCU or bridge on the other side of the escalation manager. Over time, the call may move the meshed participants to the bridge side, providing for a seamless transition to a bridge conference.

FIG. 6 is a block diagram illustrating a mesh-based conference session 600 among three endpoints 610A-C. In this simple example, the threshold for trigger an escalation to a bridge conference is 4 participants. Although illustrated as laptop computers in FIG. 6, the endpoints 610 may be any type of computational device, including mobile devices, each of which contain one or more processors and memory storing instructions that when executed cause the one or more processors to perform the disclosed actions. Although for clarity the endpoints 610 are shown directly connected to each other, typically the endpoints 610 are connected to each other via network connections across one or multiple networks (omitted in FIGs. 6-9), which may include cellular networks.

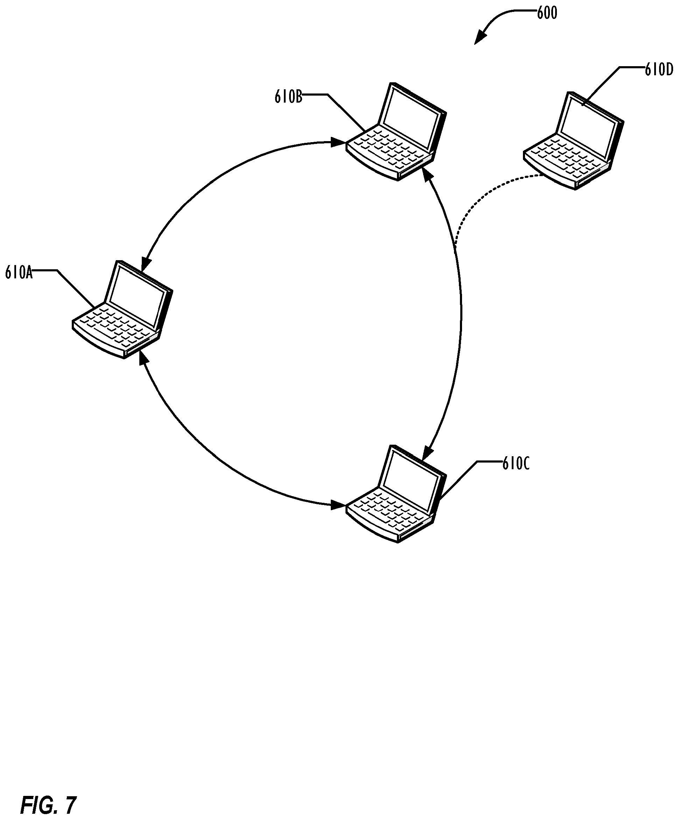

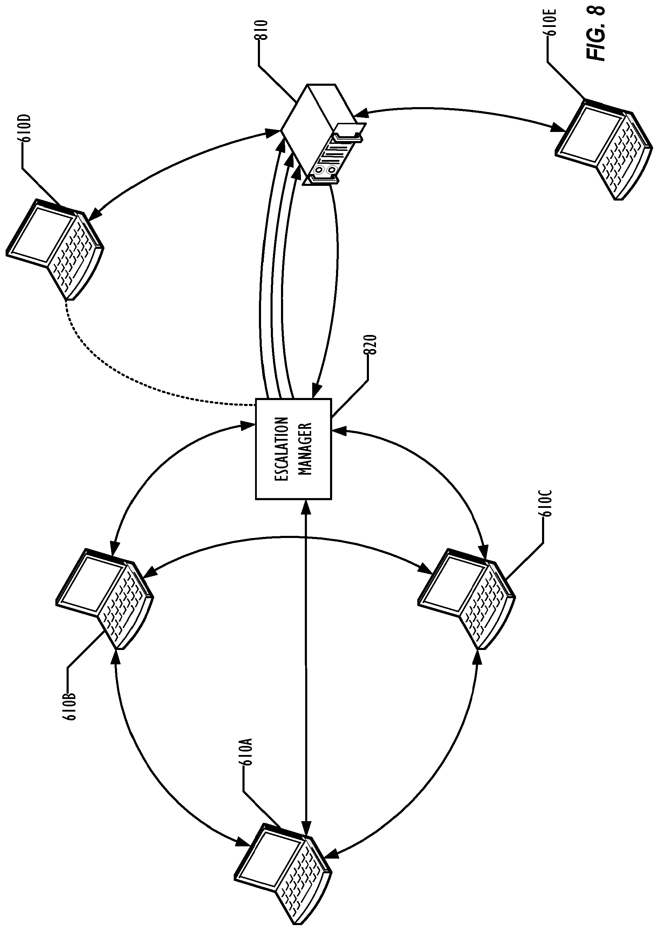

In FIG. 7, new participant 610D attempts to join the conference session, which would bring the conference to the threshold number of participants. In this embodiment, an escalation manager comes into play as illustrated in FIGs. 8-9.

Endpoint 610D contacts the escalation manager 820, indicating a desire to join the conference with endpoints 610A-C. The escalation manager 820 directs endpoint 610D to connect to bridge 810, which may be a multipoint control unit (MCU), and establishes a connection between the escalation manager 820 and the MCU 810. The escalation manager 820 also makes mesh connections with the other three endpoints 610A-C in the mesh conference, so that the conference is now a 4-way mesh conference.

On the bridge side of the call, the escalation manager 820 sends to the MCU 810 the multiple media streams received or gathered from all the other N-1 conference participants 610A-C in the meshed call. The MCU 810 sends a stitched audio-video stream of all the meshed conference participants' media to the newly added participant 610D. The MCU 810 also sends back to the escalation manager 820 an audio-video stream from endpoint 610D (the N+1st participant). The escalation manager 820 then forks the stream to all the meshed call participants 610A-C. In one embodiment, the escalation manager 820 adds a specific token for each media stream sent to the MCU 810, so that the MCU 810 does not consider the stream as media from a single source and does not send it back to the escalation manager 820 in the stitched video stream.

If yet another participant (in FIG. 8, endpoint 610E) joins the conference, that endpoint joins the bridge session only, connecting to the MCU 810. In one embodiment, the MCU 810 sends an additional media stream to the escalation manager 820 for each endpoint connected directly to the bridge 810. In other embodiments (such as the embodiment illustrated in FIG. 8), a single media stream is sent from the MCU 810 to the escalation manager, combining media streams from each of the participants connected directly to the bridge MCU 810.

The conference then continues as a mixed mesh-bridge conference. In one embodiment, the escalation manager 820 can decide if the entire meshed conference needs to move onto the MCU 810, using a triggering technique similar to the triggering technique described above. In other embodiments, the hybrid mesh-bridge conference may continue for the remainder of the conference session.

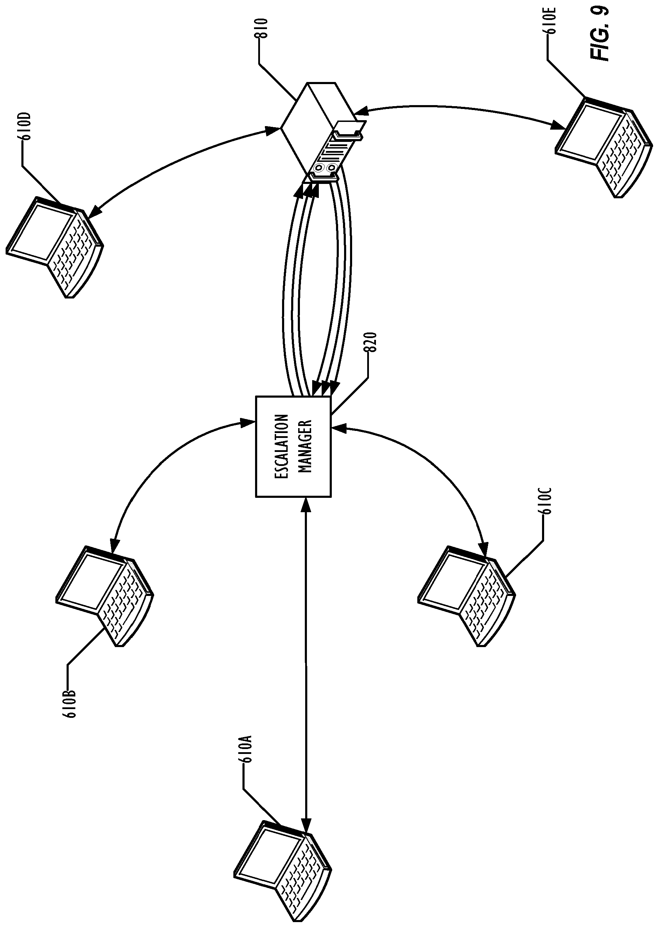

In one embodiment, the escalation manager 820 slowly stops the peer-to-peer media flow between meshed endpoints 610A-C, while directing or requesting the MCU 810 to add additional media streams for each endpoint 610A-C that drops mesh connections, as illustrated in FIG. 9. In such an embodiment, the escalation manager 820 may then function as a media relay MCU, relaying media streams to and from the MCU 810 as a proxy.

In one embodiment, the escalation manager 820 can monitor the conference, listening for active speakers. The escalation manager 820 may trigger a sequence for endpoints 610 corresponding to non-active speakers to drop their meshed connections. The escalation manager 820 also sends a notification to MCU 810, to cause the MCU 810 to start sending a separate stream intended for each endpoint 610 that is no longer part of the mesh. By snapping only non-active speaker endpoints from mesh to bridge conference connections, the conference transition appears seamless to the participant at the endpoint 610 whose connection has switched from mesh to bridged. Over time, this may result in the situation illustrated in FIG. 9, in which all of the formerly meshed endpoints 610A-C are connected as bridged endpoints via the escalation manager 820.

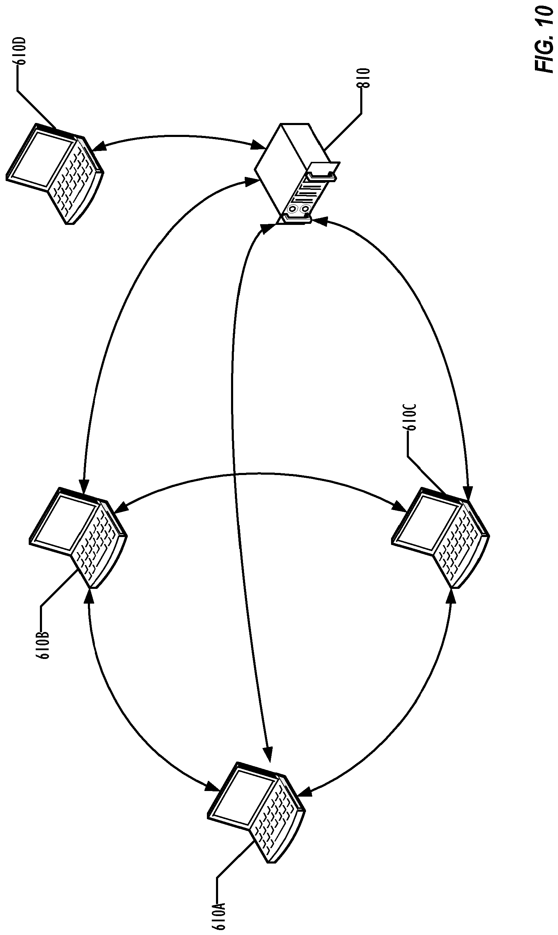

In another embodiment, illustrated in FIGs. 10-11, no escalation manager 820 is used to relay media streams. In one embodiment, instead of escalation logic in a separate escalation manager 820, escalation logic is implemented in each of the endpoints 610A-D. In another embodiment, an escalation manager may be used, but serves only to direct the endpoints and MCU 810 to perform the escalation, instead of serving as a relay for streams. The conference starts out as a meshed conference as illustrated in FIG. 6. But in the embodiment of FIGs. 10-11, when endpoint 610C attempts to join the conference, escalation logic in each of the endpoints causes the MCU 810 to join the mesh conference as the Nth participant and endpoint 610D (the N+1st endpoint) to join the conference directly on the MCU 810, as illustrated in FIG. 10.

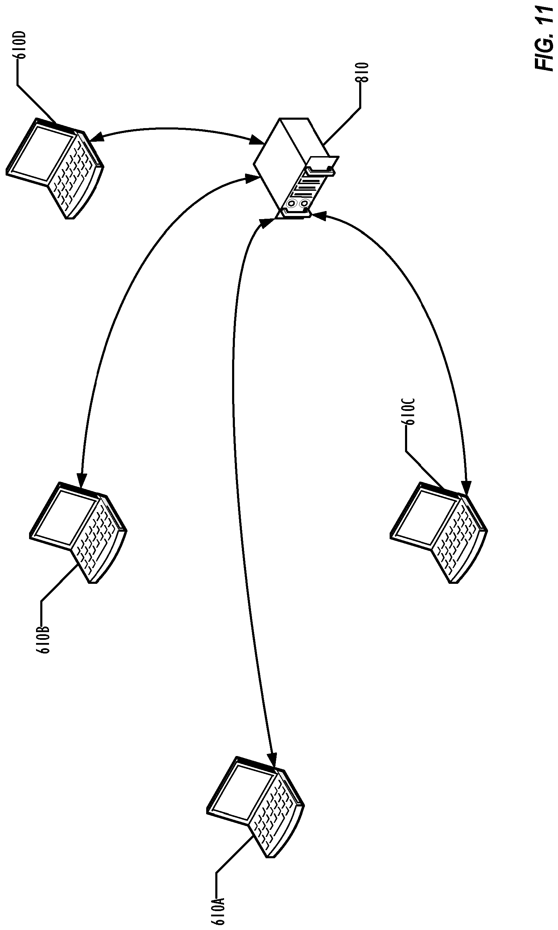

Then, over time when each of endpoints 610A-C is not an active speaker, that endpoint 610 drops its mesh connections to the other endpoints 610, and communicates only through the MCU 810, eventually resulting in the fully bridged conference of FIG. 11.

As illustrated in FIG. 10, all the current mesh-based conference participants 610A-C dial into the bridge MCU 810 while keeping their meshed call legs up and running. This ensures that the running conversation is not broken.

In one embodiment, the call to join the MCU 810 may contain a specific flag or identifier which will enables the MCU 810 to consider all the media coming from the original N-1 participants, endpoints 610A-C, as media coming from a special source that is treated logically as a single entity. In this embodiment, the media stream sent by the MCU 810 to the mesh-based participant endpoints 610A-C does not contain any audio or video of the meshed endpoints 610A-C, but only media from the participants that have joined the conference call directly on the MCU 810.

However, endpoint 610D, which is hosted on the MCU 810, receives media streams from the MCU 810 from all of the meshed conference participants 610A-C and any other bridge-connected participant from the bridge.

Similar to the transition illustrated in FIGs. 8-9, as the conference progresses, at a given point of time there may be a subset m of the N participants that are active speakers. Leaving the m active speakers untouched, escalation logic in the endpoints 610A-C can remove the rest of the other N-m participants from the meshed call. In one embodiment, this is performed sequentially, one by one, by the following procedure.

First, the existing peer-to-peer connection legs (with meshed users) are removed for an endpoint that is to transition to fully-bridged mode. Next, a notification is sent to the MCU 810 to remove that participant from the single source context, so that the MCU sends the endpoint media for all the other participants in the conference, not just the bridge-only participants.

After applying the above steps, endpoints without active speakers may transition smoothly to the MCU 810 by simply turning off their meshed connections and detaching from the common source context.

In one embodiment, all the meshed users join the call on the MCU 810 with a special key (for example, shared in Session Initiation Protocol or Session Description Protocol), that enables the MCU 810 to keep the Real-Time Protocol (RTP) media streams coming from meshed endpoints into a single source.

By keeping RTP into the same context/source, while stitching the media, the MCU 810 does not send back the meshed participants media in the stitched stream.

For example, using the example illustrated in FIGs. 10-11, endpoints 610A-C are on the meshed call; thus, they are directly getting media streams from each other. When endpoint 610D joins the call on the MCU 810, escalation happens and endpoints 610A-C send an SDP Invite to MCU 810 containing their audio video ports. In this Invite, endpoints 610A-C share a common key, allowing the MCU 810 to keep the RTP media streams coming from these endpoints as an RTP stream coming from a single source. Therefore, the MCU 810 does not send the stitched media back to the endpoints 610A-C, preventing echoing their streams back to the meshed endpoints 610A-C that are still talking to each other over their mesh connections.

New participant endpoint 610D, however, gets the media from all the meshed endpoints 610A-C and all the meshed endpoints 610A-C get media from endpoint 610D as a conference participant in the stitched video coming back to the endpoints 610A-C from the MCU 810. When any of the endpoints 610A-C transitions from mesh to bridged connections, the media stream from that endpoint no longer contains the special key, causing the MCU 810 to include media from that endpoint in the stitched media stream. Once that happens, the endpoints may simply drop their mesh connections.

Embodiments may be implemented in one or a combination of hardware, firmware, and software. Embodiments may also be implemented as instructions stored on a computer-readable storage medium, which may be read and executed by at least one processing element to perform the operations described herein. A computer-readable storage medium may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media.

Embodiments, as described herein, may include, or may operate on, logic or a number of components, modules, or mechanisms. Modules may be hardware, software, or firmware communicatively coupled to one or more processing elements in order to carry out the operations described herein. Modules may be hardware modules, and as such, modules may be considered tangible entities capable of performing specified operations and may be configured or arranged in a certain manner. Circuits may be arranged (e.g., internally or with respect to external entities such as other circuits) in a specified manner as a module. The whole or part of one or more programmable devices (e.g., a standalone client or server computer system) or one or more hardware processing elements may be configured by firmware or software (e.g., instructions, an application portion, or an application) as a module that operates to perform specified operations. The software may reside on a computer readable medium. The software, when executed by the underlying hardware of the module, causes the hardware to perform the specified operations. Accordingly, the term hardware module is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Where modules are temporarily configured, each of the modules need not be instantiated at any one moment in time. For example, where the modules comprise a general-purpose hardware processing element configured using software; the general-purpose hardware processing element may be configured as respective different modules at different times. Software may accordingly program a hardware processor, for example, to constitute a particular module at one instance of time and to constitute a different module at a different instance of time. Modules may also be software or firmware modules, which operate to perform the methodologies described herein.

It is to be understood that the above description is intended to be illustrative, and not restrictive. For example, the above-described embodiments may be used in P77035 EP - Ka hle r Kä c k Mo lle ko p f - 77035e p .b 2e .c le an combination with each other. Many other embodiments will be apparent to those of skill in the art upon reviewing the above description. The scope of the invention is defined by the appended claims.

**Claims**

1. A machine readable medium, on which are stored instructions, comprising instructions that when executed by a conferencing endpoint cause the conferencing endpoint (610A) to:

   determine (115) a mesh to bridge conference triggering event has occurred in a mesh conferencing session with a plurality of other conferencing endpoints (610B-E);

   establish (125) a bridge connection (410, 420, 430) between the conferencing endpoint (610A) and a bridge (810) responsive to the determination (115), the bridge connection (410, 420, 430) configured for two-way audio-video communication between the conferencing endpoint (610A) and the bridge (810);

   notify (130) the plurality of other conferencing endpoints (610B-E) that the conferencing endpoint (610A) has transitioned to the bridge connection (410, 420, 430) after the establishment (125) of the bridge connection (410, 420, 430) between the conferencing endpoint (610A) and the bridge (810);

   listen (140) for a notification from a second conferencing endpoint of the plurality of other conferencing endpoints (610B-E) indicating the second conferencing endpoint has transitioned to a bridge connection (410, 420, 430) responsive to the determination (115);

   receive (145) the notification from the second conferencing endpoint of the plurality of other conferencing endpoints (610B-E);

   track (155) which of the plurality of other conferencing endpoints (610B-E) have transitioned to bridge connections (410, 420, 430) prior to the establishment (125) of the bridge connection (410, 420, 430) between the conferencing endpoint (610A) and the bridge (810);

   tear down (160) a mesh connection (320, 330, 350, 360) between the conferencing endpoint (610A) and the second conferencing endpoint responsive to the receipt (145) of the notification after the establishment (125) of the bridge connection (410, 420, 430) between the conferencing endpoint (610A) and the bridge (810); and tear down (135) any mesh connections (320, 330, 350, 360) for tracked endpoints after the notification (130) of the plurality of other conferencing endpoints (610B-E) that the conferencing endpoint (610A) has transitioned to the bridge connection (410, 420, 430).

2. The machine readable medium of claim 1,

   wherein video of the bridge connection (410, 420, 430) is initially hidden, and
   wherein video of the bridge connection (410, 420, 430) is unhidden (170) responsive to an active speaker endpoint of the plurality of conferencing endpoints transitioning to a bridge connection (410, 420, 430).

3. The machine readable medium of claim 1 or 2, wherein a transition from the mesh conferencing session to a bridge conference is completed upon receiving notifications that all of the plurality of other conferencing endpoints (610B-E) have transitioned to a bridge connection (410, 420, 430).

4. The machine readable medium of claim 1, 2 or 3, wherein the mesh to bridge conferencing triggering event comprises a function of one or more metrics.

5. The machine readable medium of claim 4, wherein a metric of the one or more metrics comprises how many conferencing endpoints are connected to the mesh conferencing session.

6. The machine readable medium of claim 4 or 5, wherein the instructions that when executed by the conferencing endpoint, cause the conferencing endpoint (610A) to determine (115) whether the mesh to bridge conference triggering event has occurred comprise instructions that when executed by the conferencing endpoint, cause the conferencing endpoint (610A) to determine the mesh to bridge conference triggering event has occurred responsive to the function exceeding a threshold value.

7. A machine readable medium, on which are stored instructions, comprising instructions that when executed by a conferencing endpoint cause the conferencing endpoint (610A) to:

   determine (215) a bridge to mesh conference triggering event has occurred in a bridge conferencing session with a plurality of other conferencing endpoints (610B-E);
   set up (220) mesh connections (320, 330, 350, 360) with the plurality of other conferencing endpoints (610B-E), keeping local video and remote audio muted;
   notify (230) each of the plurality of other conferencing endpoints (610B-E) that the conferencing endpoint (610A) has transitioned to a mesh conference;
   listen (235) for notifications from the plurality of other conferencing endpoints (610B-E) that the corresponding other conferencing endpoint of the plurality of other conferencing endpoints (610B-E) has transitioned to the mesh conference;
   unmute (260) the local video and remote audio on all mesh connections and show (265) a mesh video stream after receiving the notifications from all of the plurality of other conferencing endpoints and notifying (230) each of the plurality of other conferencing endpoints (610B-E) that the conferencing endpoint (610A) has transitioned to a mesh conference; and
   tear down (265) a connection (410, 420, 430) to a bridge (810) responsive to receiving the notifications from all of the plurality of other conferencing endpoints (610B-E).

8. The machine readable medium of claim 7, wherein the bridge to mesh conference triggering event comprises a function of one or more metrics.

9. The machine readable medium of claim 8, wherein a metric of the one or more metrics comprises how many conferencing endpoints are connected to the bridge conferencing session.

10. The machine readable medium of claim 8 or 9, wherein instructions that when executed determine (215) whether the bridge to mesh conference triggering event has occurred comprise instructions that when executed cause the conferencing endpoint (610A) to determine the bridge to mesh conference triggering event has occurred responsive to the function not exceeding a threshold value.

11. An escalation manager, comprising:

    a processing element;
    a memory, coupled to the processing element, on which are stored instructions that when executed by the processing element, cause the processing element to:

       receive an indication from a conferencing endpoint (610D) wanting to join a mesh conferencing session having a plurality of other conferencing endpoints (610A-C);

determine that the conferencing endpoint (610D) would bring the mesh conferencing session to a threshold number of endpoints; direct the conferencing endpoint (610D) to connect to a bridge (810); establish a connection between the bridge (810) and the escalation manager (820); establish mesh connections (320, 330, 350, 360) with each of the plurality of other conferencing endpoints (610A-C); forward media streams received from the plurality of other conferencing endpoints (610A-C) to the bridge (810), for forwarding to the conferencing endpoint (610D); and forward media streams received from the bridge (810) via the mesh connections (320, 330, 350, 360) to the plurality of other conferencing endpoints (610A-C).

12. The escalation manager of claim 11, wherein the instructions further comprise instructions that when executed by the processing element, cause the processing element to:
transition the mesh conferencing session with the plurality of other conferencing endpoints (610A-C) to the bridge (810).

13. The escalation manager of claim 11 or 12, wherein the escalation manager (820) comprises a media relay multipoint control unit.

**Patentansprüche**

1. Maschinenlesbares Medium, auf dem Anweisungen gespeichert sind, die Anweisungen umfassen, die, wenn sie durch einen Konferenzendpunkt ausgeführt werden, bewirken, dass der Konferenzendpunkt (610A):

bestimmt (115), dass ein Mesh-zu-Bridge-Konferenzauslöseereignis in einer Mesh-Konferenzsitzung mit einer Vielzahl von anderen Konferenzendpunkten (610B-E) aufgetreten ist; eine Bridge-Verbindung (410, 420, 430) zwischen dem Konferenzendpunkt (610A) und einer Bridge (810) in Reaktion auf die Bestimmung (115) aufbaut (125), wobei die Bridge-Verbindung (410, 420, 430) für eine Zweiwege-Audio-Video-Kommunikation zwischen dem Konferenzendpunkt (610A) und der Bridge (810) ausgelegt ist; nach dem Aufbau (125) der Bridge-Verbindung (410, 420, 430) zwischen dem Konferenzendpunkt (610A) und der Bridge (810) die Vielzahl von anderen Konferenzendpunkten (610B-E) benachrichtigt (130), dass der Konferenzendpunkt (610A) zu der Bridge-Verbindung (410, 420, 430) übergegangen ist;
auf eine Benachrichtigung von einem zweiten Konferenzendpunkt der Vielzahl von anderen Konferenzendpunkten (610B-E) horcht (140), die angibt, dass der zweite Konferenzendpunkt in Reaktion auf die Bestimmung (115) zu einer Bridge-Verbindung (410, 420, 430) übergegangen ist; die Benachrichtigung von dem zweiten Konferenzendpunkt der Vielzahl von anderen Konferenzendpunkten (610B-E) empfängt (145); verfolgt (155), welche der Vielzahl von anderen Konferenzendpunkten (610B-E) zu Bridge-Verbindungen (410, 420, 430) übergegangen sind, vor dem Aufbau (125) der Bridge-Verbindung (410, 420, 430) zwischen dem Konferenzendpunkt (610A) und der Bridge (810); eine Mesh-Verbindung (320, 330, 350, 360) zwischen dem Konferenzendpunkt (610A) und dem zweiten Konferenzendpunkt in Reaktion auf den Empfang (145) der Benachrichtigung nach dem Aufbau (125) der Bridge-Verbindung (410, 420, 430) zwischen dem Konferenzendpunkt (610A) und der Bridge (810) abbricht (160); und irgendwelche Mesh-Verbindungen (320, 330, 350, 360) für verfolgte Endpunkte nach der Benachrichtigung (130) der Vielzahl von anderen Konferenzendpunkten (610B-E), dass der Konferenzendpunkt (610A) zu der Bridge-Verbindung (410, 420, 430) übergegangen ist, abbricht (135).

2. Maschinenlesbares Medium nach Anspruch 1,

wobei ein Video der Bridge-Verbindung (410, 420, 430) anfänglich ausgeblendet ist, und wobei ein Video der Bridge-Verbindung (410, 420, 430) in Reaktion darauf, dass ein aktiver Sprecherendpunkt der Vielzahl von Konferenzendpunkten zu einer Bridge-Verbindung (410, 420, 430) übergeht, eingeblendet wird (170).

3. Maschinenlesbares Medium nach Anspruch 1 oder 2, wobei ein Übergang von der Mesh-Konferenzsitzung zu einer Bridge-Konferenz beim Empfang von Benachrichtigungen, dass alle der Vielzahl von anderen Konferenzendpunkten (610B-E) zu einer Bridge-Verbindung (410, 420, 430) übergegangen sind, vollendet wird.

4. Maschinenlesbares Medium nach Anspruch 1, 2 oder 3, wobei das Mesh-zu-Bridge-Konferenzauslöseereignis eine Funktion von einer oder mehreren Metriken umfasst.

5. Maschinenlesbares Medium nach Anspruch 4, wobei eine Metrik der einen oder der mehreren Metriken umfasst, wie viele Konferenzendpunkte mit der Mesh-Konferenzsitzung verbunden sind.

**6.** Maschinenlesbares Medium nach Anspruch 4 oder 5, wobei die Anweisungen, die, wenn sie durch den Konferenzendpunkt ausgeführt werden, bewirken, dass der Konferenzendpunkt (610A) bestimmt (115), ob das Mesh-zu-Bridge-Konferenzauslöseereignis aufgetreten ist, Anweisungen umfassen, die, wenn sie durch den Konferenzendpunkt ausgeführt werden, bewirken, dass der Konferenzendpunkt (610A) in Reaktion darauf, dass die Funktion einen Schwellenwert überschreitet, bestimmt, dass das Mesh-zu-Bridge-Konferenzauslöseereignis aufgetreten ist.

**7.** Maschinenlesbares Medium, auf dem Anweisungen gespeichert sind, die Anweisungen umfassen, die, wenn sie durch einen Konferenzendpunkt ausgeführt werden, bewirken, dass der Konferenzendpunkt (610A):

bestimmt (215), dass ein Bridge-zu-Mesh-Konferenzauslöseereignis in einer Bridge-Konferenzsitzung mit einer Vielzahl von anderen Konferenzendpunkten (610B-E) aufgetreten ist;
Mesh-Verbindungen (320, 330, 350, 360) mit der Vielzahl von anderen Konferenzendpunkten (610B-E) einrichtet (220), wobei lokales Video und entferntes Audio stummgeschaltet gehalten werden;
jeden der Vielzahl von anderen Konferenzendpunkten (610B-E) benachrichtigt (230), dass der Konferenzendpunkt (610A) zu einer Mesh-Konferenz übergegangen ist;
auf Benachrichtigungen von der Vielzahl von anderen Konferenzendpunkten (610B-E), dass der entsprechende andere Konferenzendpunkt der Vielzahl von anderen Konferenzendpunkten (610B-E) zu der Mesh-Konferenz übergegangen ist, horcht (235);
nach dem Empfangen der Benachrichtigungen von allen der Vielzahl von anderen Konferenzendpunkten und dem Benachrichtigen (230) von jedem der Vielzahl von anderen Konferenzendpunkten (610B-E), dass der Konferenzendpunkt (610A) zu einer Mesh-Konferenz übergegangen ist, das lokale Video und entfernte Audio an allen Mesh-Verbindungen lautschaltet (260) und einen Mesh-Videostrom zeigt (265); und
eine Verbindung (410, 420, 430) mit einer Bridge (810) in Reaktion auf das Empfangen der Benachrichtigungen von allen der Vielzahl von anderen Konferenzendpunkten (610B-E) abbricht (265).

**8.** Maschinenlesbares Medium nach Anspruch 7, wobei das Bridge-zu-Mesh-Konferenzauslöseereignis eine Funktion von einer oder mehreren Metriken umfasst.

**9.** Maschinenlesbares Medium nach Anspruch 8, wobei eine Metrik der einen oder der mehreren Metriken umfasst, wie viele Konferenzendpunkte mit der Bridge-Konferenzsitzung verbunden sind.

**10.** Maschinenlesbares Medium nach Anspruch 8 oder 9, wobei Anweisungen, die, wenn sie ausgeführt werden, bestimmen (215), ob das Bridge-zu-Mesh-Konferenzauslöseereignis aufgetreten ist, Anweisungen umfassen, die, wenn sie ausgeführt werden, bewirken, dass der Konferenzendpunkt (610A) in Reaktion darauf, dass die Funktion einen Schwellenwert nicht überschreitet, bestimmt, dass das Bridge-zu-Mesh-Konferenzauslöseereignis aufgetreten ist.

**11.** Eskalationsmanager, der umfasst:

ein Verarbeitungselement;
einen mit dem Verarbeitungselement gekoppelten Speicher, auf dem Anweisungen gespeichert sind, die, wenn sie durch das Verarbeitungselement ausgeführt werden, bewirken, dass das Verarbeitungselement:

eine Angabe von einem Konferenzendpunkt (610D) empfängt, der sich einer Mesh-Konferenzsitzung mit einer Vielzahl von anderen Konferenzendpunkten (610A-C) anschließen will;
bestimmt, dass der Konferenzendpunkt (610D) die Mesh-Konferenzsitzung auf eine Schwellenanzahl von Endpunkten bringen würde;
den Konferenzendpunkt (610D) anleitet, sich mit einer Bridge (810) zu verbinden;
eine Verbindung zwischen der Bridge (810) und dem Eskalationsmanager (820) aufbaut;
Mesh-Verbindungen (320, 330, 350, 360) mit jedem der Vielzahl von anderen Konferenzendpunkten (610A-C) aufbaut;
Medienströme, die von der Vielzahl von anderen Konferenzendpunkten (610A-C) empfangen werden, zum Weiterleiten zum Konferenzendpunkt (610D) zu der Bridge (810) weiterleitet; und
Medienströme, die von der Bridge (810) über die Mesh-Verbindungen (320, 330, 350, 360) empfangen werden, zu der Vielzahl von anderen Konferenzendpunkten (610A-D) weiterleitet.

**12.** Eskalationsmanager nach Anspruch 11, wobei die Anweisungen ferner Anweisungen umfassen, die, wenn sie durch das Verarbeitungselement ausgeführt werden, bewirken, dass das Verarbeitungselement:

die Mesh-Konferenzsitzung mit der Vielzahl von anderen Konferenzendpunkten (610A-C) zu der Bridge (810) überführt.

13. Eskalationsmanager nach Anspruch 11 oder 12, wobei der Eskalationsmanager (820) eine Medienweiterleitungs-Mehrpunktsteuereinheit umfasst.

## Revendications

1. Support lisible par ordinateur, sur lequel sont conservées en mémoire des instructions, comprenant des instructions qui, lorsqu'elles sont exécutées par un point d'extrémité de téléconférence, amènent le point d'extrémité de téléconférence (610A) à :

déterminer (115) qu'un événement de déclenchement de téléconférence de maillage à pont s'est produit dans une session de téléconférence maillée avec une pluralité d'autres points d'extrémité de téléconférence (610B-E),
établir (125) une connexion en pont (410, 420, 430) entre le point d'extrémité de téléconférence (610A) et un pont (810) en réponse à la détermination (115), la connexion en pont (410, 420, 430) étant configurée pour une communication audio-vidéo bidirectionnelle entre le point d'extrémité de téléconférence (610A) et le pont (810),
notifier (130) à la pluralité d'autres points d'extrémité de téléconférence (610B-E) que le point d'extrémité de téléconférence (610A) a effectué une transition vers la connexion en pont (410, 420, 430) après l'établissement (125) de la connexion en pont (410, 420, 430) entre le point d'extrémité de téléconférence (610A) et le pont (810),
écouter (140) à la recherche d'une notification provenant d'un deuxième point d'extrémité de téléconférence de la pluralité d'autres points d'extrémité de téléconférence (610B-E) indiquant que le deuxième point d'extrémité de téléconférence a effectué une transition vers une connexion en pont (410, 420, 430) en réponse à la détermination (115),
recevoir (145) la notification à partir du deuxième point d'extrémité de téléconférence de la pluralité d'autres points d'extrémité de téléconférence (610B-E),
repérer (155) quels points d'extrémité de la pluralité d'autres points d'extrémité de téléconférence (610B-E) ont effectué une transition vers des connexions en pont (410, 420, 430) avant l'établissement (125) de la connexion en pont (410, 420, 430) entre le point d'extrémité de téléconférence (610A) et le pont (810),
démonter (160) une connexion maillée (320, 330, 350, 360) entre le point d'extrémité de téléconférence (610A) et le deuxième point d'extrémité de téléconférence en réponse à la réception (145) de la notification après l'établissement (125) de la connexion en pont (410, 420, 430) entre le point d'extrémité de téléconférence (610A) et le pont (810), et
démonter (135) toutes les connexions maillées (320, 330, 350, 360) à la recherche de points d'extrémité repérés après la notification (130) à la pluralité d'autres points d'extrémité de téléconférence (610B-E) que le point d'extrémité de téléconférence (610A) a effectué une transition vers la connexion en pont (410, 420, 430).

2. Support lisible par ordinateur selon la revendication 1,

dans lequel la vidéo de la connexion en pont (410, 420, 430) est initialement cachée, et
dans lequel la vidéo de la connexion en pont (410, 420, 430) est montrée (170) en réponse à l'exécution d'une transition par un point d'extrémité de locuteur actif de la pluralité de points d'extrémité de téléconférence vers une connexion en pont (410, 420, 430).

3. Support lisible par ordinateur selon la revendication 1 ou 2, dans lequel une transition de la session de téléconférence maillée vers une téléconférence en pont est réalisée après la réception de notifications indiquant que la totalité de la pluralité d'autres points d'extrémité de téléconférence (610B-E) ont effectué une transition vers une connexion en pont (410, 420, 430).

4. Support lisible par ordinateur selon la revendication 1, 2 ou 3, dans lequel l'événement de déclenchement de téléconférence de maillage à pont comprend une fonction d'une ou de plusieurs mesures.

5. Support lisible par ordinateur selon la revendication 4, dans lequel une mesure des une ou plusieurs mesures comprend le nombre de points d'extrémité de téléconférence qui sont connectés à la session de téléconférence maillée.

6. Support lisible par ordinateur selon la revendication 4 ou 5, dans lequel les instructions qui lorsqu'elles sont exécutées par le point d'extrémité de téléconférence, amènent le point d'extrémité de téléconférence (610A) à déterminer (115) si l'événement de déclenchement de téléconférence de maillage à pont s'est produit, comprennent des instructions qui, lorsqu'elles sont exécutées par le point d'extrémité de téléconférence, amènent le point d'extrémité de téléconférence (610A) à déterminer que l'événement de déclenchement de téléconférence de maillage à pont s'est produit en réponse au dépassement par la fonction d'une valeur seuil.

7. Support lisible par ordinateur, sur lequel sont conservées en mémoire des instructions, comprenant des instructions qui, lorsqu'elles sont exécutées par un point d'extrémité de téléconférence, amènent le point d'extrémité de téléconférence (610A) à :

déterminer (215) qu'un événement de déclenchement de téléconférence de pont à maillage s'est produit dans une session de téléconférence en pont avec une pluralité d'autres points d'extrémité de téléconférence (610B-E),
établir (220) des connexions maillées (320, 330, 350, 360) avec la pluralité d'autres points d'extrémité de téléconférence (610B-E), en maintenant la vidéo locale et l'audio à distance en sourdine,
notifier (230) à chaque point d'extrémité de la pluralité d'autres points d'extrémité de téléconférence (610B-E) que le point d'extrémité de téléconférence (610A) a effectué une transition vers une téléconférence maillée,
écouter (235) à la recherche de notifications provenant de la pluralité d'autres points d'extrémité de téléconférence (610B-E) indiquant que l'autre point d'extrémité de téléconférence correspondant de la pluralité d'autres points d'extrémité de téléconférence (610B-E) a effectué une transition vers la téléconférence maillée,
rétablir le son (260) de la vidéo locale et de l'audio à distance sur la totalité des connexions maillées et montrer (265) un flux vidéo maillé après la réception des notifications provenant de la totalité des points d'extrémité de la pluralité d'autres points d'extrémité de téléconférence et la notification (230) à chaque point d'extrémité de la pluralité d'autres points d'extrémité de téléconférence (610B-E) que le point d'extrémité de téléconférence (610A) a effectué une transition vers une téléconférence maillée, et
démonter (265) une connexion (410, 420, 430) à un pont (810) en réponse à la réception des notifications provenant de la totalité de la pluralité d'autres points d'extrémité de téléconférence (610B-E).

8. Support lisible par ordinateur selon la revendication 7, dans lequel l'événement de déclenchement de téléconférence de pont à maillage comprend une fonction d'une ou de plusieurs mesures.

9. Support lisible par ordinateur selon la revendication 8, dans lequel une mesure des une ou plusieurs mesures comprend le nombre de points d'extrémité de téléconférence qui sont connectés à la session de téléconférence en pont.

10. Support lisible par ordinateur selon la revendication 8 ou 9, dans lequel les instructions qui, lorsqu'elles sont exécutées, déterminent (215) si l'événement de déclenchement de téléconférence de pont à maillage s'est produit, comprennent des instructions qui, lorsqu'elles sont exécutées, amènent le point d'extrémité de téléconférence (610A) à déterminer que l'événement de déclenchement de téléconférence de pont à maillage s'est produit en réponse au non-dépassement par la fonction d'une valeur seuil.

11. Gestionnaire d'escalade, comprenant :

un élément de traitement,
une mémoire, couplée à l'élément de traitement, sur laquelle sont conservées en mémoire des instructions qui, lorsqu'elles sont exécutées par l'élément de traitement, amènent l'élément de traitement à :

recevoir une indication à partir d'un point d'extrémité de téléconférence (610D) souhaitant rejoindre une session de téléconférence maillée possédant une pluralité d'autres points d'extrémité de téléconférence (610A-C),
déterminer que le point d'extrémité de téléconférence (610D) porterait la session de téléconférence maillée à un nombre seuil de points d'extrémité,
diriger le point d'extrémité de téléconférence (610D) de façon à se connecter à un pont (810),
établir une connexion entre le pont (810) et le gestionnaire d'escalade (820),
établir des connexions maillées (320, 330, 350, 360) avec chaque point d'extrémité de la pluralité d'autres points d'extrémité de téléconférence (610A-C),
transférer des flux multimédias reçus de la pluralité d'autres points d'extrémité de téléconférence (610A-C) au pont (810) pour un transfert vers le point d'extrémité de téléconférence (610D), et
transférer des flux multimédias reçus du pont (810) par l'intermédiaire des connexions maillées (320, 330, 350, 360) vers la pluralité d'autres points d'extrémité de téléconférence (610A-C).

12. Gestionnaire d'escalade selon la revendication 11, dans lequel les instructions comprennent en outre des instructions qui, lorsqu'elles sont exécutées par l'élément de traitement, amènent l'élément de traitement à :

effectuer une transition de la session de téléconférence maillée avec la pluralité d'autres points d'extrémité de téléconférence (610A-C) vers le pont (810).

13. Gestionnaire d'escalade selon la revendication 11 ou 12, dans lequel le gestionnaire d'escalade (820) comprend une unité de commande à points multiples de relais multimédia.

**FIG. 1**

FIG. 2

**FIG. 3**

FIG. 4

*FIG. 5*

FIG. 6

FIG. 7

FIG. 8

FIG. 9

FIG. 10

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150271447 A1

- EP 2863632 A1